# EUROPEAN PATENT APPLICATION

(11) **EP 4 628 719 A1**
(43) Date of publication of application: **08.10.2025**
(21) Application number: 25168946.9
(22) Date of filing: 07.04.2025
(51) Int. Cl.: F02C 7/36, F01D 21/00

(54) **TURBOSHAFT GEARBOX SPEED RATIO STAGE**

(30) Priority: 05.04.2024 US 202418628385
(71) Applicant: PRATT & WHITNEY CANADA CORP., Longueuil, Québec J4G 1A1 (CA)
(72) Inventor: LANDRY-DROLET, Guillaume, (01BE5) Longueuil, J4G 1A1 (CA); DESJARDINS, Michel, (01BE5) Longueuil, J4G 1A1 (CA)
(74) Representative: Dehns

(57) **Abstract**

A turboshaft engine (201) includes a turbine shaft (210), an output shaft (220) and a combined speed ratio stage and torque measuring system (230). The combined speed ratio stage and torque measuring system (230) includes a rigid assembly (240), a sensor system (250) and first and second bearings (261, 262). The rigid assembly (240) includes a torque tube (241), a first gear-speed ratio stage (280) to transmit gear-reduced or gear-increased torque from the turbine shaft (210) and to the torque tube (241) and a second gear-speed ratio stage (290) to transmit gear-reduced or gear-increased torque from the torque tube (241) to the output shaft (220). The sensor system (250) measures twist of the torque tube (241). The first and second bearings (261, 262) support the rigid assembly (240).

## Description

### BACKGROUND

The invention relates to gas turbine engines and, in particular, to a gas turbine engine with a turboshaft gearbox speed ratio stage with a torque measuring system.

In a gas turbine engine, fuel and compressed air are combusted in a combustor to produce a high-temperature and high-pressure fluid. This fluid enters a turbine and interacts with rows or stages of turbine blades and vanes. The interaction between the high-temperature and high-pressure fluid with the turbine blades and vanes causes the stages of turbine blades to rotate a rotor. The rotor rotation drives a compressor to compress the air for the combustor and, as noted above, can be used to drive operations of a generator to produce electricity and/or for propulsion.

### SUMMARY

According to a first aspect of the invention, a turboshaft engine includes a turbine shaft, an output shaft and a combined speed ratio stage and torque measuring system. The combined speed ratio stage and torque measuring system includes a rigid assembly including a torque tube, a first gear-speed ratio stage to transmit gear-reduced or gear-increased torque from the turbine shaft and to the torque tube and a second gear-speed ratio stage to transmit gear-reduced or gear-increased torque from the torque tube to the output shaft, a sensor system to measure twist of the torque tube and first and second bearings to support the rigid assembly.

In accordance with additional or alternative embodiments of the above, the turbine shaft is a power turbine shaft, which is rotatable about a first rotational axis thereof and the output shaft is a gearbox output shaft, which is rotatable about a second rotational axis thereof, which is offset from the first rotational axis.

In accordance with additional or alternative embodiments of any of the above, the turboshaft engine further includes a reference tube disposed within the torque tube and the sensor system is a twist-based measurement system that measures relative rotation between the torque tube and the reference tube.

In accordance with additional or alternative embodiments of any of the above, the sensor system includes a phonic wheel formed by teeth of respective ends of the torque tube and the reference tube.

**In** accordance with additional or alternative embodiments of any of the above, the rigid assembly is separable in that the torque tube is separable from at least one of the first gear-speed ratio stage and the second gear-speed ratio stage or inseparable in that the torque tube is inseparable from at least one of the first gear-speed ratio stage and the second gear-speed ratio stage.

In accordance with additional or alternative embodiments of any of the above, the first bearing is aligned with a mesh plane of a mesh gear of the first gear-speed ratio stage and the second bearing is aligned with a mesh plane of a mesh gear of the second gear-speed ratio stage.

According to another aspect of the invention, a torque measuring system assembly method is provided. The torque measuring system assembly method includes installing a first bearing of a first bearing pair on a first gear stage to form a first assembly, installing the first assembly in a rear housing to form a second assembly, sliding a torque/reference tube assembly into the second assembly for first gear stage registration via a first spline, installing a first bearing of a second bearing pair on a second gear stage to form a third assembly, installing the third assembly into a front housing to form a fourth assembly, installing second bearings of the first and second bearing pairs onto an intermediate housing to form a fifth assembly, installing the fifth assembly into the rear housing or the front housing to form a sixth assembly, where the fifth assembly is installed into the rear housing, sliding the fourth assembly into the sixth assembly while passing over phonic wheel components of a torque/reference tube twist measuring sensor system to trap the torque/reference tube assembly and for second gear stage registration via a second spline, where the fifth assembly is installed into the front housing, sliding the sixth assembly into the second assembly while passing over the phonic wheel components to trap the torque/reference tube assembly and for second gear stage registration via a second spline and installing the torque/reference tube twist measuring sensor system in the front housing.

In accordance with additional or alternative embodiments of the above, the first gear stage transfers torque from a turbine shaft to the torque/reference tube assembly and the second gear stage transfers torque from the torque/reference tube assembly to an output shaft, the turbine shaft is a power turbine shaft, which is rotatable about a first rotational axis thereof and the output shaft is a gearbox output shaft, which is rotatable about a second rotational axis thereof, which is offset from the first rotational axis.

In accordance with additional or alternative embodiments of any of the above, the torque/reference tube assembly includes a torque tube and a reference tube disposed within the torque tube and the torque/reference tube twist measuring sensor system is a twist-based measurement system that measures relative rotation between the torque tube and the reference tube.

In accordance with additional or alternative embodiments of any of the above, the phonic wheel components of the torque/reference tube twist measuring sensor system include a phonic wheel formed by teeth of respective ends of the torque tube and the reference tube.

In accordance with additional or alternative embodiments of any of the above, the first and second splines are free, non-piloted splines.

In accordance with additional or alternative embodiments of any of the above, the torque/reference tube assembly is axially trapped between the first and second gear stages.

In accordance with additional or alternative embodiments of any of the above, the torque measuring system assembly method further includes installing a lubrication system configured to distribute lubrication to at least the first and second splines.

According to another aspect of the invention, a torque measuring system assembly method is provided. The torque measuring system assembly method includes installing a first bearing of a first bearing pair in a rear housing to form a first assembly, sliding a first gear stage and a torque/reference tube assembly into the first assembly whereby the torque/reference tube assembly registers with the first gear stage via a first spline, installing a first bearing of a second bearing pair into a front housing to form a second assembly, sliding a second gear stage into the second assembly, installing second bearings of the first and second bearing pairs onto an intermediate housing to form a third assembly, installing the third assembly into the rear housing or the front housing to form a fourth assembly, where the third assembly is installed into the rear housing, sliding the second assembly into the fourth assembly whereby the second gear stage registers with the torque/reference tube assembly via a second spline, where the third assembly is installed into the front housing, sliding the fourth assembly into the first assembly while passing over phonic wheel components of a torque/reference tube twist measuring sensor system whereby the second gear stage registers with the torque/reference tube assembly via the second spline and installing the torque/reference tube twist measuring sensor system in the front housing.

In accordance with additional or alternative embodiments of the above, the first gear stage transfers torque from a turbine shaft to the torque/reference tube assembly and the second gear stage transfers torque from the torque/reference tube assembly to an output shaft, the turbine shaft is a power turbine shaft, which is rotatable about a first rotational axis thereof and the output shaft is a gearbox output shaft, which is rotatable about a second rotational axis thereof, which is offset from the first rotational axis.

In accordance with additional or alternative embodiments of any of the above, the torque/reference tube assembly includes a torque tube and a reference tube disposed within the torque tube and the torque/reference tube twist measuring sensor system is a twist-based measurement system that measures relative rotation between the torque tube and the reference tube.

In accordance with additional or alternative embodiments of any of the above, the phonic wheel components of the torque/reference tube twist measuring sensor system include a phonic wheel formed by teeth of respective ends of the torque tube and the reference tube.

In accordance with additional or alternative embodiments of any of the above, the first and second splines are free, non-piloted splines.

In accordance with additional or alternative embodiments of any of the above, the torque/reference tube assembly is axially trapped between the first and second gear stages.

In accordance with additional or alternative embodiments of any of the above, the torque measuring system assembly method further includes installing a lubrication system configured to distribute lubrication to at least the first and second splines.

Additional features and advantages are realized through the techniques of the present invention, or embodiments thereof. Other embodiments and aspects of the invention are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of the invention, reference is now made to the following brief description, taken in connection with the accompanying drawings and detailed description, wherein like reference numerals represent like parts:
FIG. 1 is a cross-sectional view of a prior art turboshaft engine;
FIG. 2 is a side view of a portion of a turboshaft engine in accordance with embodiments;
FIG. 3A is a side view of a portion of a turboshaft engine in accordance with embodiments;
FIG. 3B is a flow diagram illustrating a method of assembling a combined speed ratio stage and torque measuring system of a turboshaft engine in accordance with embodiments;
FIG. 4 is a flow diagram illustrating a method of assembling a combined speed ratio stage and torque measuring system for a turboshaft engine in accordance with embodiments; and
FIG. 5 is a flow diagram illustrating a method of assembling a combined speed ratio stage and torque measuring system for a turboshaft engine in accordance with embodiments.

### DETAILED DESCRIPTION

The following invention is applicable to any type of gas turbine engine, including, but not limited to, turbofans, turboshafts, turboprops, turbojets, etc. The gas turbine engine described below is provided by way of example, and should not be interpreted as limiting the scope of the application or the claims in any way.

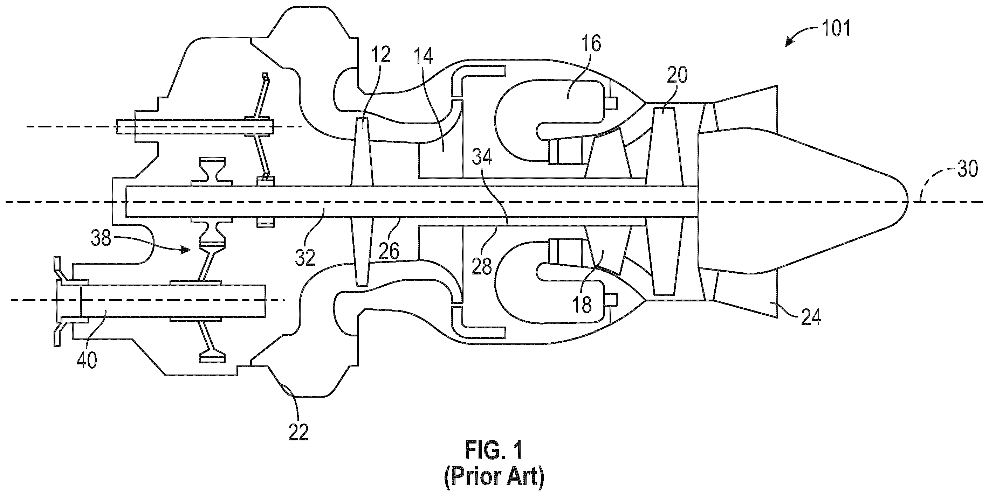

With reference to FIG. 1, a turboshaft engine 101 is provided and configured as a gas turbine engine. In particular, the turboshaft engine 101 is a generally conventional turboshaft engine generally including, in serial flow communication, a low pressure (LP) compressor section 12 and a high pressure (HP) compressor section 14 for pressurizing air, a combustor 16 in which the compressed air is mixed with fuel and ignited for generating an annular stream of hot combustion gases, a high pressure turbine section 18 for extracting energy from the combustion gases and driving the high pressure compressor section 14 and a lower pressure turbine section 20 for further extracting energy from the combustion gases and driving at least the low pressure compressor section 12.

The low pressure compressor section 12 may independently rotate from the high pressure compressor section 14. The low pressure compressor section 12 may include one or more compression stages and the high pressure compressor section 14 may include one or more compression stages. A compressor stage may include a compressor rotor, or a combination of the compressor rotor and a compressor stator assembly. In a multistage compressor configuration, the compressor stator assemblies may direct the air from one compressor rotor to the next.

The turboshaft engine 101 has multiple, i.e. two or more, spools which may perform the compression to pressurize the air received through an air inlet 22, and which extract energy from the combustion gases before they exit via an exhaust outlet 24. For example, the turboshaft engine 101 can include a low pressure spool 26 and a high pressure spool 28 mounted for rotation about an engine axis 30. The low pressure and high pressure spools 26, 28 are independently rotatable relative to each other about the axis 30. The term "spool" is herein intended to broadly refer to drivingly connected turbine and compressor rotors.

The low pressure spool 26 includes a low pressure shaft 32 interconnecting the low pressure turbine section 20 with the low pressure compressor section 12 to drive rotors of the low pressure compressor section 12. In other words, the low pressure compressor section 12 may include at least one low pressure compressor rotor directly drivingly engaged to the low pressure shaft 32 and the low pressure turbine section 20 may include at least one low pressure turbine rotor directly drivingly engaged to the low pressure shaft 32 so as to rotate the low pressure compressor section 12 at a same speed as the low pressure turbine section 20. The high pressure spool 28 includes a high pressure shaft 34 interconnecting the high pressure turbine section 18 with the high pressure compressor section 14 to drive rotors of the high pressure compressor section 14. In other words, the high pressure compressor section 14 may include at least one high pressure compressor rotor directly drivingly engaged to the high pressure shaft 34 and the high pressure turbine section 18 may include at least one high pressure turbine rotor directly drivingly engaged to the high pressure shaft 34 so as to rotate the high pressure compressor section 14 at a same speed as the high pressure turbine section 18. In some embodiments, the high pressure shaft 34 may be hollow and the low pressure shaft 32 extends therethrough. The two shafts 32, 34 are free to rotate independently from one another.

The turboshaft engine 101 may further include a transmission 38 driven by the low pressure shaft 32 and driving a rotatable output shaft 40. The transmission 38 may vary a ratio between rotational speeds of the low pressure shaft 32 and the output shaft 40.

Typically, in turboshaft engines, such as the turboshaft engine 101 of FIG. 1, torque reading systems measure twist between a torque tube and a reference tube (e.g., as part of a phonic wheel system) and are often provided on turboshaft powertrains, either on power turbine shafts, such as the low pressure shaft 32 of FIG. 1, and gearbox output shafts, such as the output shaft 40 of FIG. 1. In these or other cases, it was found that a phonic wheel torque measuring system located on a power turbine shaft was not ideal in terms of minimizing engine length. Moreover, it has also been found that, to reduce gearbox output axial length and/or to include a clutch, a phonic wheel torque measuring system located on the gearbox output shaft was not suitable.

A need therefore exists for a turboshaft torque measuring system that allows for minimized engine length without being placed on a gearbox output shaft.

Thus, as will be described below, a turboshaft engine is provided with a combined speed ratio stage and a "twist based" torque measuring system. The torque measuring system has two separate gear shafts on a same axis, with each gear shaft being supported by two bearings. A torque tube and a reference tube assembly connect the two separate gear shafts through free, non-piloted splines and exhibits radially positioning by clearance fits on the splines (i.e., such as side fits, major/minor diameter fits, etc.). Spline lubrication can be provided by external jets aimed toward the shaft internal diameters and distributed through the torque tube and the reference tube assembly through a network of passages.

In addition, as will be described below, a turboshaft engine is provided with a combined speed ratio stage and a "twist based" torque measuring system. The torque measuring system has two gears and a torque tube forming a rigid assembly that is supported by two bearings. The two bearings are aligned with mesh planes of the two gears, which makes the torque tube feasible by minimizing or limiting the bending moment due to the gear load.

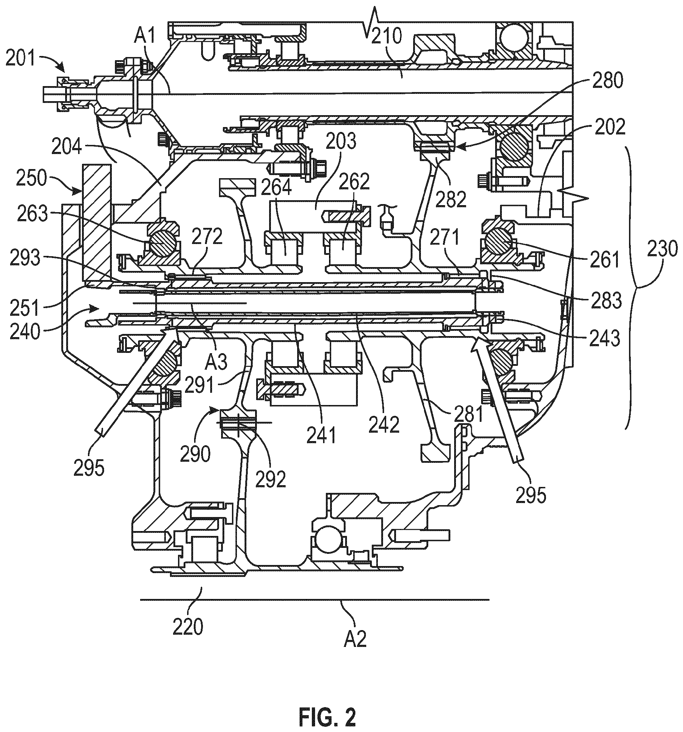

With reference to FIG. 2, a turboshaft engine 201 is provided and is similar in some respects to the turboshaft engine 101 of FIG. 1. A detailed description of the similar features of the turboshaft engine 201 and the turboshaft engine 101 will not be needed except as provided below.

As shown in FIG. 2, the turboshaft engine 201 includes a rear housing 202, an intermediate housing 203, a front housing 204, a turbine shaft, an output shaft and a combined speed ratio stage and torque measuring system 230. The turbine shaft can be provided as a power turbine shaft 210, which is rotatable about first rotational axis A1 thereof. Hereinafter, the turbine shaft will be referred to as the "power turbine shaft 210". The output shaft can be provided as a gearbox output shaft 220, which is rotatable about second rotational axis A2 thereof, which is offset from first rotational axis A1. Hereinafter, the output shaft will be referred to as the "gearbox output shaft 220". The combined speed ratio stage and torque measuring system 230 includes a torque and reference tube assembly 240, a sensor system 250 to measure twist in the torque and reference tube assembly 240, a pair of first bearings 261 and 262 supported on the rear housing 202 and the intermediate housing 203, a pair of second bearings 263 and 264 supported on the front housing 204 and the intermediate housing 203, a first spline 271 (i.e., a free, non-piloted spline which allows for relative axial movement), a second spline 272 (i.e., a free, non-piloted spline which allows for relative axial movement), a first gear-speed ratio stage 280 and a second gear-speed ratio stage 290. The turboshaft engine 201 can further include a lubrication system 295 that is configured to distribute jets of lubrication to at least the first and second splines 271 and 272.

The torque and reference tube assembly 240 includes a torque tube 241 and a reference tube 242 that are both rotatable about rotational axis A3. The reference tube 242 is disposed within the torque tube 241. The torque tube 241 transmits gear-reduced or gear-increased torque between the first and second gear-speed ratio stages 280 and 290 as will be described below. The reference tube 242 is rotationally driven by rotation of the torque tube 241 due to connection 243 (i.e., rigid or pin connection) but does not experience torque input/output. Thus, when subject to torque, the torque tube 241 will become rotationally displaced from the reference tube 242 due to a twisting deformation. The sensor system 250 is a twist-based measurement system that measures the displacement or relative rotation between the torque tube 241 and the reference tube 242 when subject to torque. The sensor system 250 can include a phonic wheel 251 formed by teeth of respective ends of the torque tube 241 and the reference tube 242.

A first gear shaft 281 of the first gear-speed ratio stage 280 meshes with the power turbine shaft 210 via first mesh gear 282. The first gear shaft 281 is supported by the pair of first bearings 261 and 262 and is connected to the torque tube 241 of the torque and reference tube assembly 240 via the first spline 271. The first gear-speed ratio stage 280 is thus configured and positioned to transmit gear-reduced or gear-increased torque from the power turbine shaft 210 and to the torque tube 241 of the torque and reference tube assembly 240.

A second gear shaft 291 of the second gear-speed ratio stage 290 meshes with the gearbox output shaft 220 via second mesh gear 292. The second gear shaft 291 is supported by the pair of second bearings 263 and 264 and is connected to the torque tube 241 of the torque and reference tube assembly 240 via the second spline 272. The second gear-speed ratio stage 290 is thus configured and positioned to transmit gear-reduced or gear-increased torque from the torque tube 241 of the torque and reference tube assembly 240 and to the gearbox output shaft 220.

In accordance with embodiments, the torque and reference tube assembly 240 can be radially positioned by clearance fits on the first and second splines 271 and 272 and can be axially trapped between respective first and second bosses 283 and 293 of the first and second gear-speed ratio stages 280 and 290.

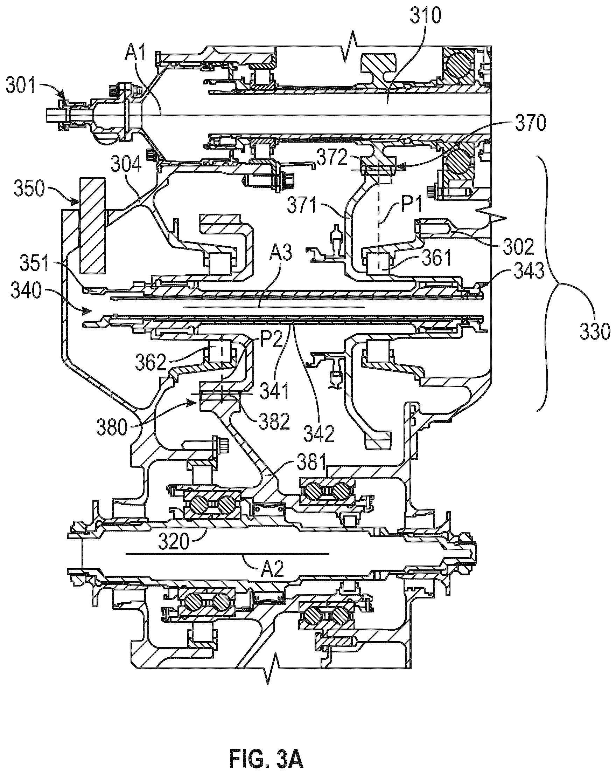

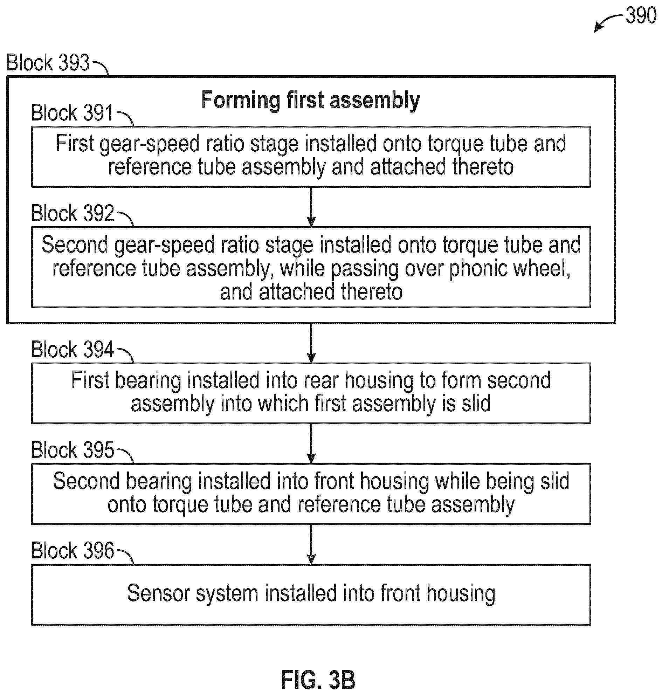

With reference to FIGS. 3A and 3B, a turboshaft engine 301 is provided and is similar in some respects to the turboshaft engine 101 of FIG. 1. A detailed description of the similar features of the turboshaft engine 301 and the turboshaft engine 101 will not be needed except as provided below.

As shown in FIG. 3A, the turboshaft engine 301 includes a rear housing 302, a front housing 304, a turbine shaft, an output shaft and a combined speed ratio stage and torque measuring system 330. The turbine shaft can be provided as a power turbine shaft 310, which is rotatable about first rotational axis A1 thereof. Hereinafter, the turbine shaft will be referred to as the "power turbine shaft 310". The output shaft can be provided as a gearbox output shaft 320, which is rotatable about second rotational axis A2 thereof, which is offset from first rotational axis A1. Hereinafter, the output shaft will be referred to as the "gearbox output shaft 320". The combined speed ratio stage and torque measuring system 330 includes a rigid assembly 340, a sensor system 350, a first bearing 361 supported on the rear housing 302 and a second bearing 362 supported on the front housing 304.

The rigid assembly 340 can include a torque tube 341, a reference tube 342 disposed within the torque tube 341 such that the torque tube 341 and the reference tube 342 are rotatable about rotational axis A3, a first gear-speed ratio stage 370 configured to transmit gear-reduced or gear-increased torque from the power turbine shaft 310 and to the torque tube 341 and a second gear-speed ratio stage 380 configured to transmit gear-reduced or gear-increased torque from the torque tube 341 to the gearbox output shaft 320. The rigid assembly 340 is supported by the first and second bearings 361 and 362. The torque tube 341 transmits gear-reduced or gear-increased torque between the first and second gear-speed ratio stages 370 and 380. The reference tube 342 is rotationally driven by rotation of the torque tube 341 due to connection 343 (i.e., rigid or pin connection) but does not experience torque input/output. Thus, when subject to torque, the torque tube 341 will become rotationally displaced from the reference tube 342 due to a twisting deformation. The sensor system 350 is a twist-based measurement system that measures the displacement or relative rotation between the torque tube 341 and the reference tube 342 when subject to torque. The sensor system 350 can include a phonic wheel 351 formed by teeth of respective ends of the torque tube 341 and the reference tube 342.

A first gear shaft 371 of the first gear-speed ratio stage 370 meshes with the power turbine shaft 310 via first mesh gear 372. The first bearing 361 can be aligned with a mesh plane P1 of the first mesh gear 371. A second gear shaft 381 of the first gear-speed ratio stage 380 meshes with the power turbine shaft 310 via second mesh gear 382. The second bearing 362 can be aligned with a mesh plane P2 of the second mesh gear 382. This arrangement limits or minimizes a bending moment of the torque tube 341 due to gear loading.

The rigid assembly 340 can be separable in that the torque tube 341 can be separable from at least one of the first gear-speed ratio stage 370 and the second gear-speed ratio stage 380 and connected to the first gear-speed ratio stage 370 and the second gear-speed ratio stage 380 via, e.g., splines, nuts, pins, etc. As an alternative, the rigid assembly 340 can be inseparable in that the torque tube 341 is inseparable from at least one of the first gear-speed ratio stage 370 and the second gear-speed ratio stage 380 owing to, e.g., welded connections.

The combined speed ratio stage and torque measuring system 330 of the turboshaft engine 301 of FIG. 3A can be assembled as illustrated in the method 390 as shown in FIG. 3B. Initially, the first gear-speed ratio stage 370 is installed onto the torque tube 341 and reference tube 342 assembly and attached thereto with a nut or some other suitable fastener (block 391) and then the second gear-speed ratio stage 380 is installed onto the torque tube and reference tube 342 assembly, while passing over phonic wheel 351, and attached thereto with a nut or some other suitable fastener (block 392). This forms a first assembly (block 393). The first bearing 361 is installed into the rear housing 302 to form a second assembly into which the first assembly is slid (block 394). Then, the second bearing 362 is installed into the front housing 304 while being slid onto the torque tube 341 and reference tube 342 assembly (block 395). The sensor system 350 is then installed into the front housing 304 (block 396).

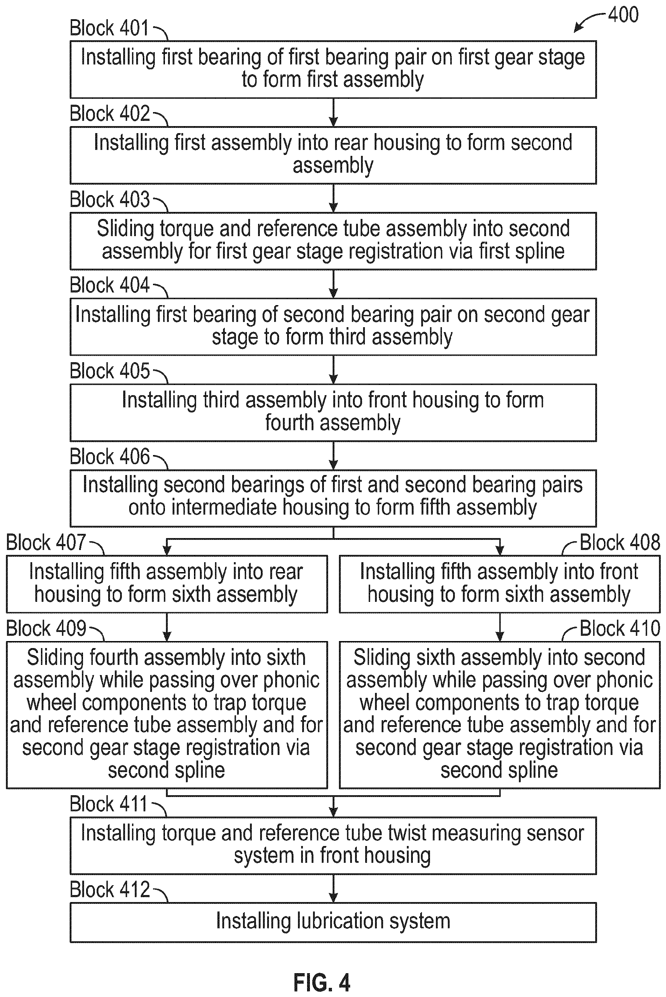

With reference to FIG. 4, a torque measuring system assembly method 400 is provided as a method of assembling the turboshaft engine 201 of FIG. 2. The method 400 includes installing a first bearing of a first bearing pair on a first gear stage to form a first assembly (block 401), installing the first assembly into a rear housing to form a second assembly (block 402) and sliding a torque and reference tube assembly into the second assembly for first gear stage registration via a first spline (block 403). As used herein, the term "registration" can refer to spline alignment and engagement. The method 400 also includes installing a first bearing of a second bearing pair on a second gear stage to form a third assembly (block 404) and installing the third assembly into a front housing to form a fourth assembly (block 405). In addition, the method 400 includes installing second bearings of the first and second bearing pairs onto an intermediate housing to form a fifth assembly (block 406), and installing the fifth assembly into the rear housing or the front housing to form a sixth assembly (block 407/block 408). Where the fifth assembly is installed into the rear housing in block 407, the method 400 includes sliding the fourth assembly into the sixth assembly while passing over phonic wheel components of a torque/reference tube twist measuring sensor system to trap the torque/reference tube assembly and for second gear stage registration via a second spline (block 409). Where the fifth assembly is installed into the front housing of block 408, the method 400 includes sliding the sixth assembly into the second assembly while passing over the phonic wheel components to trap the torque/reference tube assembly and for second gear stage registration via a second spline (block 410). In addition, the method 400 also includes installing the torque/reference tube twist measuring sensor system in the front housing (block 411) and, in some cases, installing a lubrication system configured to distribute lubrication to at least the first and second splines (block 412).

In accordance with embodiments and as described above, the first gear stage (i.e., the first gear-speed ratio stage 280 of FIG. 2) transfers torque from a turbine shaft (i.e., the turbine power shaft 210 of FIG. 2) to the torque and reference tube assembly and the second gear stage (i.e., the second gear-speed ratio stage 290) transfers torque from the torque and reference tube assembly to an output shaft (i.e., the gearbox output shaft 220 of FIG. 2). Also, the torque and reference tube assembly corresponds to the torque and reference tube assembly 240 of FIG. 2, the torque and reference tube twist measuring sensor system and the phonic wheel respectively correspond to the sensor system 250 and the phonic wheel 251 of FIG. 2 and the first and second splines are free, non-piloted splines and correspond to the first and second splines 271 and 272 of FIG. 2. As such, the torque and reference tube assembly of the method 400 is radially positioned by clearance fits on the first and second splines and is axially trapped between the first and second gear stages.

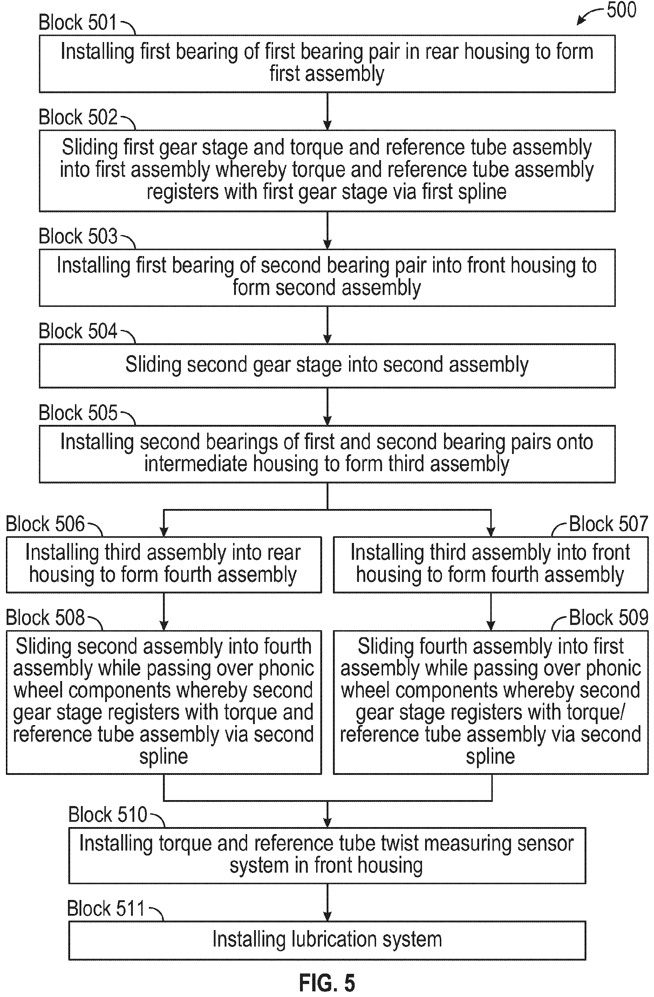

With reference to FIG. 5, a torque measuring system assembly method 500 is provided as a method of assembling the turboshaft engine 201 of FIG. 2. The method 500 includes installing a first bearing of a first bearing pair in a rear housing to form a first assembly (block 501), sliding a first gear stage and a torque and reference tube assembly into the first assembly whereby the torque and reference tube assembly registers with the first gear stage via a first spline (block 502), installing a first bearing of a second bearing pair into a front housing to form a second assembly (block 503) and sliding a second gear stage into the second assembly (block 504). The method 500 also includes installing second bearings of the first and second bearing pairs onto an intermediate housing to form a third assembly (block 505) and installing the third assembly into the rear housing or the front housing to form a fourth assembly (block 506/507). Where the third assembly is installed into the rear housing of block 506, the method 500 includes sliding the second assembly into the fourth assembly while passing over phonic wheel components of a torque/reference tube twist measuring sensor system whereby the second gear stage registers with the torque/reference tube assembly via the second spline (block 508). Where the third assembly is installed into the front housing of block 507, the method 500 includes sliding the fourth assembly into the first assembly while passing over the phonic wheel components whereby the second gear stage registers with the torque/reference tube assembly via the second spline (block 509). In addition, the method 500 also includes installing the torque/reference tube twist measuring sensor system in the front housing (block 510) and, in some cases, installing a lubrication system configured to distribute lubrication to at least the first and second splines (block 511).

In accordance with embodiments and as described above, the first gear stage (i.e., the first gear-speed ratio stage 280 of FIG. 2) transfers torque from a turbine shaft (i.e., the turbine power shaft 210 of FIG. 2) to the torque and reference tube assembly and the second gear stage (i.e., the second gear-speed ratio stage 290) transfers torque from the torque and reference tube assembly to an output shaft (i.e., the gearbox output shaft 220 of FIG. 2). Also, the torque and reference tube assembly corresponds to the torque and reference tube assembly 240 of FIG. 2, the torque and reference tube twist measuring sensor system and the phonic wheel respectively correspond to the sensor system 250 and the phonic wheel 251 of FIG. 2 and the first and second splines are free, non-piloted splines and correspond to the first and second splines 271 and 272 of FIG. 2. As such, the torque and reference tube assembly of the method 400 is radially positioned by clearance fits on the first and second splines and is axially trapped between the first and second gear stages.

Technical effects and benefits of the present disclosure are the provision of a turboshaft engine with a reduced overall powerplant length, a gearbox output that can have a shorter bearing span to match existing customer installation requirements and a simplified gearbox output shaft allowing additional features to be added to the output shaft, such as a clutch system. In addition, a turboshaft engine is provided that has a reduced overall powerplant length, a reduced gearbox weight, cost and part count, a simplified gearbox output shaft allowing additional features to be added to the output shaft, such as a clutch system.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A turboshaft engine (201; 301), comprising:
a turbine shaft (210; 310);
an output shaft (220; 320); and
a combined speed ratio stage and torque measuring system (230; 330), comprising:
a rigid assembly (240; 340) comprising a torque tube (241; 341), a first gear-speed ratio stage (280; 370) configured to transmit gear-reduced or gear-increased torque from the turbine shaft (210; 310) to the torque tube (241; 341), and a second gear-speed ratio stage (290; 380) configured to transmit gear-reduced or gear-increased torque from the torque tube (241; 341) to the output shaft (220; 320);
a sensor system (250; 350) to measure twist of the torque tube (241; 341); and
first and second bearings (261, 262, 263, 264; 361, 362) to support the rigid assembly (240; 340).

2. The turboshaft engine (201; 301) of claim 1, wherein:
the turbine shaft (210; 310) is a power turbine shaft, which is rotatable about a first rotational axis (A1) thereof, and
the output shaft (220; 320) is a gearbox output shaft (220; 320), which is rotatable about a second rotational axis (A2) thereof, which is offset from the first rotational axis (A1).

3. The turboshaft engine (201; 301) of claim 1 or 2, wherein:
the turboshaft engine (201; 301) further comprises a reference tube (242; 342) disposed within the torque tube (241; 341), and
the sensor system (250; 350) is a twist-based measurement system that measures relative rotation between the torque tube (241; 341) and the reference tube (242; 342).

4. The turboshaft engine (201; 301) of claim 3, wherein the sensor system (250; 350) comprises a phonic wheel (251; 351) formed by teeth of respective ends of the torque tube (241; 341) and the reference tube (242; 342).

5. The turboshaft engine (201; 301) of any preceding claim, wherein the rigid assembly (240; 340) is separable in that the torque tube (241; 341) is separable from at least one of the first gear-speed ratio stage (280; 370) and the second gear-speed ratio stage (290; 380).

6. The turboshaft engine (201; 301) of any of claims 1 to 4, wherein the rigid assembly (240; 340) is inseparable in that the torque tube (241; 341) is inseparable from at least one of the first gear-speed ratio stage (280; 370) and the second gear-speed ratio stage (290; 380).

7. The turboshaft engine (301) of any preceding claim, wherein the first bearing (361) is aligned with a mesh plane (P1) of a mesh gear (372) of the first gear-speed ratio stage (370) and the second bearing (362) is aligned with a mesh plane (P2) of a mesh gear (382) of the second gear-speed ratio stage (380).

8. A torque measuring system assembly method, comprising:
installing a first bearing (261) of a first bearing pair on a first gear stage (280) to form a first assembly;
installing the first assembly in a rear housing (202) to form a second assembly;
sliding a torque/reference tube assembly (240) into the second assembly for first gear stage registration via a first spline (271);
installing a first bearing (263) of a second bearing pair on a second gear stage (290) to form a third assembly;
installing the third assembly into a front housing (204) to form a fourth assembly;
installing second bearings (262, 264) of the first and second bearing pairs onto an intermediate housing (203) to form a fifth assembly;
installing the fifth assembly into the rear housing (202) or the front housing (204) to form a sixth assembly;
where the fifth assembly is installed into the rear housing (202), sliding the fourth assembly into the sixth assembly while passing over phonic wheel components of a torque/reference tube twist measuring sensor system (250) to trap the torque/reference tube assembly (240) and for second gear stage registration via a second spline (272);
where the fifth assembly is installed into the front housing (204), sliding the sixth assembly into the second assembly while passing over the phonic wheel components to trap the torque/reference tube assembly (240) and for second gear stage registration via a second spline (272); and
installing the torque/reference tube twist measuring sensor system (250) in the front housing (204).

9. A torque measuring system assembly method, comprising:
installing a first bearing (261) of a first bearing pair in a rear housing (202) to form a first assembly;
sliding a first gear stage (280) and a torque/reference tube assembly (240) into the first assembly whereby the torque/reference tube assembly (240) registers with the first gear stage (280) via a first spline (271);
installing a first bearing (263) of a second bearing pair into a front housing (204) to form a second assembly;
sliding a second gear stage (290) into the second assembly;
installing second bearings (263) of the first and second bearing pairs onto an intermediate housing (203) to form a third assembly;
installing the third assembly into the rear housing (202) or the front housing (204) to form a fourth assembly;
where the third assembly is installed into the rear housing (202), sliding the second assembly into the fourth assembly while passing over phonic wheel components of a torque/reference tube twist measuring sensor system (250) whereby the second gear stage (290) registers with the torque/reference tube assembly (240) via the second spline (272);
where the third assembly is installed into the front housing (204), sliding the fourth assembly into the first assembly while passing over the phonic wheel components whereby the second gear stage registers with the torque/reference tube assembly (240) via the second spline (272); and
installing the torque/reference tube twist measuring sensor system (250) in the front housing (204).

10. The torque measuring system assembly method of claim 8 or 9, wherein:
the first gear stage (280) transfers torque from a turbine shaft (210) to the torque/reference tube assembly (240) and the second gear stage transfers torque from the torque/reference tube assembly (240) to an output shaft (220);
the turbine shaft (210) is a power turbine shaft, which is rotatable about a first rotational axis (A1) thereof; and
the output shaft (220) is a gearbox output shaft, which is rotatable about a second rotational axis (A2) thereof, which is offset from the first rotational axis (A1).

11. The torque measuring system assembly method of any of claims 8 to 10, wherein:
the torque/reference tube assembly (240) comprises a torque tube (241) and a reference tube (242) disposed within the torque tube (241); and
the torque/reference tube twist measuring sensor system (250) is a twist-based measurement system that measures relative rotation between the torque tube (241) and the reference tube (242).

12. The torque measuring system assembly method of claim 11, wherein the phonic wheel components of the torque/reference tube twist measuring sensor system (250) comprise a phonic wheel (251) formed by teeth of respective ends of the torque tube (241) and the reference tube (242).

13. The torque measuring system assembly method of any of claims 8 to 12, wherein the first and second splines (271, 272) are free, non-piloted splines.

14. The torque measuring system assembly method of any of claims 8 to 13, wherein the torque/reference tube assembly (240) is axially trapped between the first and second gear stages (280, 290).

15. The torque measuring system assembly method of any of claims 8 to 14, further comprising installing a lubrication system (295) configured to distribute lubrication to at least the first and second splines (271).
